Europäisches Patentamt

European Patent Office

Office européen des brevets

(11) Veröffentlichungsnummer: **0 211 998**
**B1**

(12) **EUROPÄISCHE PATENTSCHRIFT**

(19)

(45) Veröffentlichungstag der Patentschrift:
**11.05.88**

(21) Anmeldenummer: **85110952.0**

(22) Anmeldetag: **30.08.85**

(51) Int. Cl.⁴: **A 01 B 17/00,** A 01 B 49/02,
A 01 B 73/00

(54) **Pflug mit einem Auslegearm zum Erfassen und Mitführen von Nachfolgegeräten.**

(30) Priorität: **14.08.85 DE 8523386 U**

(43) Veröffentlichungstag der Anmeldung:
**04.03.87 Patentblatt 87/10**

(45) Bekanntmachung des Hinweises auf die Patenterteilung:
**11.05.88 Patentblatt 88/19**

(84) Benannte Vertragsstaaten:
**BE DE FR GB NL**

(56) Entgegenhaltungen:
**EP - A - 0 088 140**
**DE - A - 2 932 824**
**FR - A - 2 532 812**
**GB - A - 922 353**
**US - A - 2 923 364**
**US - A - 3 834 330**

(73) Patentinhaber: **Rabewerk Heinrich Clausing, D-4515 Bad Essen 1 (DE)**

(72) Erfinder: **Groth, Herman, Dipl.-Ing., Im Weidengrund 7, D-4515 Bad Essen 1 (DE)**
Erfinder: **Buhl, Manfred, Dipl.-Ing., Am Krähenhügel 10, D-4500 Osnabrück (DE)**
Erfinder: **Bohnenkamp, Wilfried, Dipl.-Ing., Clusring 25, D-4515 Bad Essen 1 (DE)**

(74) Vertreter: **Missling, Arne, Dipl.-Ing. et al, Patentanwälte Dipl.-Ing. R. Schlee Dipl.-Ing. A. Missling Bismarckstrasse 43, D-6300 Giessen (DE)**

## Beschreibung

Die Erfindung betrifft einen Pflug mit einem Auslegearm zum Erfassen und Mitführen von Nachfolgegeräten, wobei der Auslegearm relativ zum Pflugrahmen in eine Arbeits- und Transportstellung schwenkbar und in diesen Stellungen festlegbar ist.

Bei Pflügen der eingangs genannten Art, die mit einem Auslegearm für das Anhängen von Nachfolgegeräten versehen sind, kann der Acker in einem Arbeitsgang durch das Nachfolgegerät bearbeitet werden, ohne dass es erforderlich ist, den Acker nach dem Pflügen nochmals zu befahren. Hierdurch wird ein zusätzlicher zeitaufwendiger Arbeitsgang erspart. Vor dem Wenden des Pfluges am Ende des Ackers wird das Nachfolgegerät abgehängt und nach dem Wenden wieder aufgenommen. Die Kupplung von Nachfolgegerät und Pflug erfolgt mit Hilfe des am Pflug angeordneten Auslegearmes. Bekannt ist es, die Fangarme am Pflugrahmen über ein Gelenk anzulenken, damit diese beim Transport wie auch beim Wenden der Pflugkörper eng an den Pflugrahmen angelegt werden können, so dass zum einen die Transportbreite gering bleibt und zum anderen die Aushubhöhe des Pflugrahmens, falls die Pflugkörper unten herum gewendet werden.

Die Pflüge werden zunehmend mit Steinsicherungen versehen, bei denen die Pflugkörper Hindernissen im Boden, wie Steinen, nach oben hin ausweichen können. Es sind hier Nonstop-Steinsicherungen im Einsatz, die ein kontinuierliches Fahren gestatten, da die Pflugkörper nach Überwinden eines Hindernisses selbsttätig in ihre Arbeitsstellung zurückkehren, wie auch solche Steinsicherungen, die mit Abscherbolzen arbeiten. Damit bei den bekannten Pflügen bei eingeschwenktem Auslegearm diese Steinsicherungen funktionstüchtig bleiben, müssen die Auslegearme weit vorn am Pflug angeordnet werden, was bedingt, dass das Nachfolgegerät weit seitlich vom Pflug mitgezogen werden muss, was sich auf die Pflugführung nachteilig auswirkt. Des weiteren müssen die Auslegearme wegen der relativ grossen Hebelarme sehr stabil ausgeführt werden, was das Gewicht des Pfluges wesentlich erhöht.

Der Erfindung liegt die Aufgabe zugrunde, einen Pflug der eingangs genannten Art so auszubilden, dass ein steifer Auslegearm erhalten wird, der bei Nichtgebrauch bzw. beim Pflügen an der Feldgrenze wegschwenkbar ausgebildet ist, so dass dieser nicht über den Schlepper seitlich vorsteht und dabei die Funktion der Steinsicherung nicht behindert. Eine weitere Aufgabe besteht darin, den Auslegearm in einfacher Weise an unterschiedliche Pflugrahmen- und Pflugkörpergrössen anpassbar zu machen.

Diese Aufgabe wird mit den Merkmalen des kennzeichnenden Teils des Anspruches 1 gelöst.

Ein erfindungsgemässer Pflug weist somit einen Auslegearm auf, der an einem Bügel schwenkbar befestigt ist, dessen Enden entweder direkt am Pflugrahmen oder aber an an diesem angeordneten Konsolen befestigt sind, wobei die Enden mit Abstand zueinander am Pflugrahmen so angeordnet sind, dass der Bügel einen oder aber mehrere Pflugkörper umfasst. Der vom Bügel umfasste Pflugkörper kann, falls dieser mit einer Steinsicherung versehen ist und beim Pflügen auf ein Hindernis auftrifft, ungehindert nach oben und gegebenenfalls etwas seitlich ausschwenken. Durch die Verwendung des Bügels, der ein steifes Bauelement bildet, kann der eigentliche Auslegearm relativ kurz gehalten werden, wobei dieser gelenkig am Bügel angeordnet ist. Die Abmessungen des Bügels werden so gewählt, dass diese seitlich nicht über die Schlepperbreite überstehen, so dass bei einem in die Transportstellung verschwenkten Auslegearm der Pflug maximal die Breite des ziehenden Schleppers aufweist. Es ist so möglich, unmittelbar an Feldgrenzen zu pflügen, auch wenn dort Bewuchs etc. vorhanden ist.

Gemäss einem weiteren Vorschlag der Erfindung ist der Bügel zweiteilig ausgebildet, wobei die beiden Teile vorteilhaft mittels eines Spannschlosses verbunden sind. Soll der Freiraum für den Pflugkörper vergrössert werden, so muss lediglich das Spannschloss entsprechend eingestellt werden. Es ist so möglich, ein und denselben Auslegearm für unterschiedliche Pflugkörpergrössen oder aber auch Pflugrahmengrössen einzusetzen.

Im einfachsten Fall kann der Auslegearm über einen Lenker am Bügel abgestützt sein, wobei zum Verschwenken des Auslegearmes die Befestigung des Lenkers am Auslegearm gelöst wird. Nach Verschwenken des Auslegearmes in die Transportstellung wird dann der Lenker wieder in eine vorbereitete Bohrung am Auslegearm befestigt, so dass der Auslegearm in dieser Stellung sicher gehalten wird, auch dann, wenn die Pflugkörper gedreht werden. Es ist jedoch auch denkbar, eine fremdbetätigte Einrichtung zum Verschwenken des Auslegearmes vorzusehen, z.B. einen Hydraulikzylinder.

Weitere vorteilhafte Ausgestaltungen der Erfindung gehen aus den Unteransprüchen in Verbindung mit Beschreibung und Zeichnung hervor.

Ein Ausführungsbeispiel der Erfindung ist im folgenden anhand der Zeichnung näher beschrieben, in dieser zeigen:

Fig. 1 eine Draufsicht auf einen erfindungsgemäss ausgebildeten Pflug mit in die Transportstellung verschwenktem Auslegearm und

Fig. 2 den gleichen Pflug wie in Fig. 1, jedoch mit einem in die Arbeitsstellung verschwenkten Auslegearm.

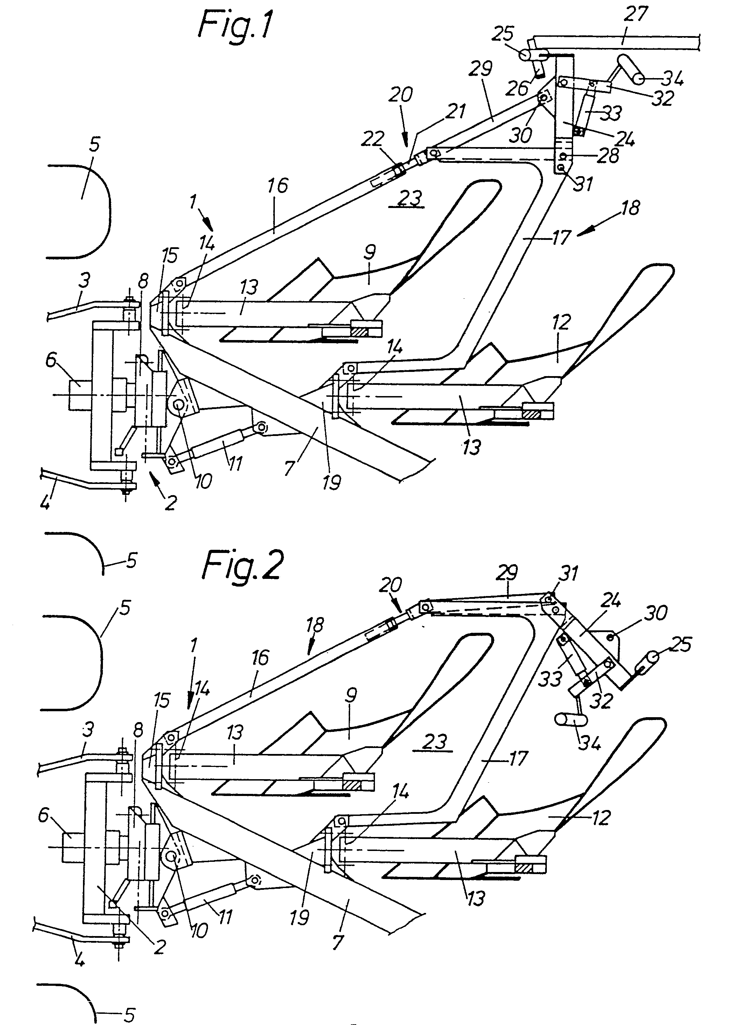

In den Fig. 1 und 2 ist der Pflug insgesamt mit 1 bezeichnet. Dieser Pflug besteht aus einem Pflugvordergestell 1, an dem die Unterlenker 3, 4 eines Schleppers angelenkt sind, von dem lediglich die Reifen 5 dargestellt sind.

Im Pflugvordergestell 2 ist eine Drehachse 6 angeordnet, an der der Pflugrahmen 7 angreift. Zwischen dem Pflugrahmen 7 und der Drehachse 6 ist in bekannter Art und Weise eine Verstelleinrichtung 8 für die Einstellung der Schnittbreite des ersten Pflugkörpers 9 angeordnet. Diese besteht aus einer Kulisse und einer Kulissenführung. Der Pflugrahmen 7 ist an einer lotrechten Achse 10 der Verstelleinrichtung 8 befestigt. Zur Einstellung der Neigung des Pflugrahmens relativ zum Pflugvordergestell 7 dient ein Spannschloss 11. Die Dreheinrichtung für das Wenden der Pflugkörper 9, 12 ist der Einfachheit halber weggelassen worden.

Jeder Pflugkörper 9, 12 ist an einem Grindel 13 befestigt, das seinerseits um eine oder zwei horizontal liegende Achse 14 schwenkbar ist. In der Arbeitsstellung wird jeder Pflugkörper 9, 12 durch einen nicht dargestellten Arbeitsspeicher gehalten.

An der Konsole 15 für den ersten Pflugkörper 9 ist ein Teil 16 eines Bügels 18 angelenkt. Der zweite Teil des Bügels ist mit 17 bezeichnet. Das Ende des Teiles 17 des Bügels ist an der Konsole 19 des zweiten Pflugkörpers 12 angelenkt.

Die beiden Teile 16, 17 des Bügels 18 sind im Ausführungsbeispiel nicht starr miteinander verbunden, sondern über eine Verstelleinrichtung 20 miteinander verbunden, die aus einer Gewindespindel 21 sowie einer Mutter 22 gebildet ist. Die Gewindespindel 21 ist am Ende des Teiles 17 gelenkig angeordnet. Beim Verändern der Länge des Spannschlosses 20 werden die beiden Teile auseinandergedrückt, so dass der zwischen dem Pflugrahmen 7 und dem Bügel 18 gebildete Freiraum 23 vergrössert oder verkleinert werden kann und somit der Grösse des Pflugkörpers 9 anpassbar ist. Dieser Pflugkörper 9 muss, wenn dieser mit einer Steinsicherung versehen ist, nach oben, und falls dies vorgesehen ist, auch in einem geringen Umfang seitlich ausweichen können, ohne durch den Bügel 18 behindert zu sein.

Am Teil 17 des Bügels 18 ist ein Auslegearm 24 befestigt, an dessen Ende eine Gabel 25 befestigt ist, die zum Ergreifen eines Fanghakens 26 dient, der an einem Fangarm 27 eines nicht weiter dargestellten Nachfolgegerätes angreift.

Der Auslegearm 24 ist über ein Gelenk 28 am Bügel 18 abgestützt und wird durch einen Lenker 29 in seiner Stellung, d. h. in Fig. 1 in der Arbeitsstellung gehalten. Wird der Lenker 29 in der Anlenkstelle 30 am Auslegearm 24 gelöst, so kann der Auslegearm 24 zu den Pflugkörpern 12 hin verschwenkt werden. Hierdurch wandert die Anlenkstelle 31 in die in Fig. 2 gezeichnete Stelle, worauf zur Festlegung des Auslegearmes 24 der Lenker 29 an dieser befestigt werden kann. In dieser Transportstellung ragt der Auslegearm 24 nicht oder nur unwesentlich über die Höhe des Bügels 18 hinaus, so dass mit dem Pflug im wesentlichen bis zur Feldgrenze gepflügt werden kann, ohne dass eine Behinderung durch den Auslegearm eintritt. Des weiteren kann der Pflugkörper weiterhin ungestört gegenüber Hindernissen ausweichen.

Der Bügel 18 besteht, wie zuvor ausgeführt worden ist, aus den beiden Teilen 16 und 17, wobei das Teil 16 als Zugstrebe ausgebildet ist, während das Teil 17 vorteilhaft eine U-förmige Gestalt aufweist. Durch die Unterteilung des Bügels in die zwei gelenkig oder verstellbar miteinander verbundenen Teile, wobei ein Teil als Zugstrebe ausgebildet ist, wobei der Lenker 29 vorteilhaft in Verlängerung der Zugstrebe angeordnet ist, wird eine optimale Abstützung und Krafteinleitung in den Fangarm 27 erhalten.

## Patentansprüche

1. Pflug mit einem Auslegearm (24) zum Erfassen und Mitführen von Nachfolgegeräten, wobei der Auslegearm (24) relativ zum Plufgrahmen (7) in eine Arbeits- und Transportstellung schwenkbar und in diesen Stellungen festlegbar ist, dadurch gekennzeichnet, dass der Auslegearm (24) an einem Bügel (18) befestigt ist, dessen Enden mittel- oder unmittelbar am Pflugrahmen (7) mit Abstand zueinander derart befestigt sind, dass dieser einen Freiraum (23) für die ungehinderte Beweglichkeit zumindest eines im Freiraum (23) befindlichen Pflugkörpers (9) bildet.

2. Pflug nach Anspruch 1, dadurch gekennzeichnet, dass die Enden des Bügels (18) am Pflugrahmen (7) angelenkt sind und der Bügel (18) zweiteilig und verstellbar ausgebildet ist.

3. Pflug nach Anspruch 2, dadurch gekennzeichnet, dass zwischen den beiden Teilen des Bügels (18) ein Spannschloss (20) angeordnet ist.

4. Pflug nach einem der Ansprüche 1 bis 3, dadurch gekennzeichnet, dass der Auslegearm (24) über einen Lenker (29) am Bügel (18) abgestützt ist, der in der Arbeits- und Transportstellung des Auslegearmes mit diesem verbunden ist.

5. Pflug nach einem der Ansprüche 1 bis 4, dadurch gekennzeichnet, dass am Auslegearm (24) eine Auslöseeinrichtung (32-34) für den Fangarm (27) eines Nachfolgegeräts angebracht ist.

## Claims

1. Plough with a jib (24) for connection to and drawing of trailer apparatuses, wherein the jib (24) is pivotable, relative to the plough frame (7), into a working position and a transport position and is securable in these positions; characterised in that the jib (24) is secured to a bar (18) whose ends, which are spaced apart from one another, are attached directly or indirectly to the plough frame (7) in such a way that said plough frame forms a free space (23) for unhampered movement of at least one plough body (9) which is located in said free space (23).

2. Plough according to claim 1, characterised in that the ends of the bar (18) are articulated on the plough frame (7), and the bar (18) is constructed in two parts and is adjustable.

3. Plough according to claim 2, characterised in that a turnbuckle (20) is arranged between the two parts of the bar (18).

4. Plough according to one of the claims 1 to 3, characterised in that the jib (24) is supported on the bar (18) by a guide rod (29), said bar being connected with said guide rod in the working position and transport position of the jib.

5. Plough according to one of the claims 1 to 4, characterised in that on the jib (24) there is arranged a release device (32-34) for the catch arm (27) of a trailer apparatus.

## Revendications

1. Charrue comportant un bras latéral (24) pour accoupler et entraîner des appareils suiveurs, ledit bras (24) étant capable de pivoter pour venir, par rapport au cadre de charrue (7), dans une position de travail ou dans une position de transport et pouvant être fixé dans ces positions, caractérisée en ce que le bras latéral (24) est fixé à un étrier (18) dont les extrémités peuvent être fixées, directement ou indirectement, au cadre de charrue (7) avec écartement mutuel de façon que celui-ci offre un espace libre (23) pour le mouvement sans obstacle d'au moins un corps de charrue (9) se trouvant dans cet espace libre (23).

2. Charrue selon la revendication 1, caractérisée en ce que les extrémités de l'étrier (18) sont articulées au cadre de charrue (7) et en ce que l'étrier (18) est constitué en deux parties et peut être réglé en position.

3. Charrue selon la revendication 2, caractérisée en ce qu'un tendeur (20) est disposé entre les deux parties de l'étrier (18).

4. Charrue selon l'une des revendications 1 à 3, caractérisée en ce que le bras latéral (24) s'appuie sur l'étrier (18) par l'intermédiaire d'un bras directeur (29) qui est relié au bras latéral dans la position de travail ou dans celle de transport.

5. Charrue selon l'une des revendications 1 à 4, caractérisée en ce qu'un dispositif de détachement (32 à 34) du bras d'attache (27) d'un appareil suiveur est monté sur le bras latéral (24).

# Fig.1

# Fig.2